# EUROPÄISCHE PATENTSCHRIFT

(11) **EP 0 790 284 B1**
(45) Veröffentlichungstag und Bekanntmachung des Hinweises auf die Patenterteilung: **03.05.2000**
(21) Anmeldenummer: 96116303.7
(22) Anmeldetag: 11.10.1996
(51) Int. Cl.: C09D 11/02, B41M 1/34, B41M 3/12, B44C 1/175

(54) **Druckmedium für keramische Farbpräparate**
Printing medium for ceramic colouring composition
Véhicules pour composition colorante pour céramique

(30) Priorität: 17.02.1996 DE 19605975
(43) Veröffentlichungstag der Anmeldung: 20.08.1997
(73) Patentinhaber: W.C. Heraeus GmbH & Co. KG, 63450 Hanau (DE)
(72) Erfinder: Bauer, Frank, 63456 Hanau (DE)
(74) Vertreter: Kühn, Hans-Christian

(56) Entgegenhaltungen:
- EP-A- 0 105 994
- EP-A- 0 599 105
- AU-B- 422 394

## Beschreibung

Die Erfindung betrifft ein Druckmedium für keramische Farbpräparate zur Herstellung von keramischen Abziehbildern im Tiefdruck.

Keramische Abziehbilder dienen der Erzeugung von auf Keramik-, Glas-, Glaskeramik- und Emailwaren eingebrannten Dekorationen. Sie bestehen im wesentlichen aus Trägerpapier, darauf befindlicher ein- oder mehrfarbiger Dekorschicht, diese schützender Lackschicht und zwischen dem Trägerpapier und der Dekorschicht angeordneter Trennschicht aus in Wasser löslichem oder quellbarem Stoff (für sogenannte wasserlösliche Abziehbilder) oder aus in der Wärme erweichendem Wachs (für sogenannte wärmeaktivierbare Abziehbilder). Die Dekorschicht wird durch Aufdrucken von keramischen Farbpräparaten aus mit einem organischen Medium, dem Druckmedium, vermischten keramischen Farben und Trocknen durch Verflüchtigen der im Druckmedium enthaltenen organischen Lösungsmittel hergestellt.

Die zur Herstellung von keramischen Abziehbildern verwendeten Druckmedien bestehen im allgemeinen aus organischen polymeren Bindemitteln, Lösungsmitteln und Verarbeitungshilfsstoffen. Die Bestandteile der Druckmedien müssen im Hinblick auf die dem Druckprozeß folgende Trocknung ausgewählt werden. Weiterhin müssen thermisches Zersetzen und Verflüchtigen beim Einbrennen der auf die zu dekorierende Ware übertragenen Abziehbilder so erfolgen, daß kein Rückstand verbleibt und der Ausbrand der Dekoration nicht gestört wird.

Die keramischen Farbpräparate für die Abziehbild-Herstellung bestehen aus dem Druckmedium, keramischen Farben - das sind anorganische keramische Dekorfarben und Pigmente - und gegebenenfalls Glasfritten. Sie werden meist in Siebdrucktechnik auf das Abziehbild-Trägerpapier aufgebracht.

DE 32 24 349 A1 betrifft ein Siebdruckmedium (Siebdrucköl), das für die Herstellung von feinen Farbrastern und reliefartigen Drucken auf bei Temperaturen oberhalb von 400° C mit keramischen Farben zu dekorierenden Materialien bestimmt ist. Es enthält für diesen Zweck neben Bindemittel und Lösungsmittel als Zusatz feinverteilte, rückstandslos verbrennende natürliche oder synthetische Wachse beziehungsweise silicatische oder oxidische Stoffe, die in das silicatische Gerüst der keramischen Farben eingebaut werden. Als Bindemittel werden unter anderem Polymethacrylate, Celluloseester und Celluloseether verwendet, als Lösungsmittel Leichtbenzin und Butylacetat.

DE 42 39 862 A1 beschreibt ein Druckmedium zur Herstellung von siebdruckfähigen keramischen Farbpasten, das aus einem organischen Lösungsmittelsystem und darin klar oder gelförmig gelöstem polymerem organischem Bindemittelsystem besteht. Das Lösungsmittelsystem enthält mindestens 50 - 100 Gewichts-% Isoparaffine (Siedepunkt 115 - 300° C), 0 - 50 Gewichts-% darin lösliche Weichmacher, beispielsweise Phthalate, und 0 - 30 Gewichts-% Alkohole, Ether, Ester und Ketone. Für das Bindemittelsystem bevorzugte Polymere sind Homo- und Copolymerisate von (C₃- C₁₂)- Alkylmethacrylaten, (C₃- C₁₂)-Alkylacrylaten, Styrol, Vinyltoluol, Vinylacrylat und 2-Ethylhexen, Polyolefine, Cyclokautschuk, Kohlenwasserstoffharze und modifizierte Alkydharze.

Aus GB 2 245 221 A ist ein in Siebdruck- oder Offsetdruck-Technik hergestelltes keramisches Abziehbild mit unterhalb und oberhalb der Dekorschicht angeordneten Glasflußschichten bekannt. Für die Herstellung der Dekorschicht werden Druckmedien auf der Basis trocknender Öle, Lacke und Harze eingesetzt; bevorzugt wird ein Leinöl-Firnis. Die unterhalb der Dekorschicht angeordnete Glasflußschicht wird mit Hilfe eines Flußmediums ("flux medium") aufgedruckt, das als polymeres Bindemittel besonders (Meth)Acrylat-Polymere und -Copolymere, wie Polybutylacrylat und Methylmethacrylat/Butylmethacrylat-Copolymer, und Cellulosederivate, wie Celluloseacetobutyrat, Ethylcellulose und Methylcellulose, enthält. Als organische Lösungsmittel werden unter anderem Alkohole, chlorierte Kohlenwasserstoffe, Ketone und Ester, wie Ethyllactat, Butyllactat und Isobutyllactat, genannt, als Weichmacher Phthalate, wie Dioctylphthalat.

Neuerdings wird zur Herstellung keramischer Abziehbilder auch die Tiefdrucktechnik angewandt. Wesentlich für die Anwendbarkeit dieses Druckverfahrens ist die homogene Verteilung der keramischen Farben in dem Druckmedium. Die keramischen Farbpräparate müssen relativ dünnflüssig sein und dürfen sich nicht entmischen, um einwandfrei bedruckte Abziehbilder und reproduzierbare Brennergebnisse zu erzielen. Auch an die Flüchtigkeit der in dem Druckmedium enthaltenen Lösungsmittel werden besondere Anforderungen gestellt; denn die im Vergleich zum Siebdruck höhere Druckgeschwindigkeit erfordert eine schnellere Trocknung der bedruckten Trägerpapiere.

Aus DE 42 03 162 C2 ist ein Verfahren und eine dafür geeignete Vorrichtung bekannt, um im Tiefdruckverfahren Transferpapiere zum Aufbrennen von Bild-, Schrift- und Dekordarstellungen auf zu brennende Keramikgegenstände und zum Beispiel Bierflaschen herzustellen. Die dafür benötigten Keramikfarbpigmente besitzen eine Korngröße von weniger als 10 Mikrometer und sind in einer organischen, einen verbrennungsbremsenden Zusatz enthaltenden Lösung homogen verteilt. Für die Lösung wird ein Ansatz aus 8 - 12 Gewichts-% Ethoxypropanol, 49 - 52 Gewichts-% Ethanol, 5 - 7 Gewichts-% Bis-(ethylhexyl)-phthalat, 19 - 21 Gewichts-% Nitrocellulose, 9 - 11 Gewichts-% Ethylacetat und 2,5 - 4,5 Gewichts-% einer Polyethylenwachsdispersion verwendet.

Der Erfindung liegt die Aufgabe zugrunde, ein Druckmedium für keramische Farbpräparate zu finden, das zur Herstellung der Dekorschichten von keramischen Abziehbildern im Tiefdruckverfahren geeignet ist. Mit Hilfe des Druckmediums sollen den Erfordernissen des Tiefdruckverfahrens besser angepaßte keramische Farbpräparate erhalten werden.

Das die Lösung der Aufgabe darstellende Druckmedium ist erfindungsgemäß dadurch gekennzeichnet, daß es 50 - 70 Gewichts-% Butylacetat, 25 - 30 Gewichts-% einer Mischung aus 40 - 65 Gewichts-% Polyisobutylmethacrylat und 35 - 60 Gewichts-% Celluloseacetobutyrat und 3 - 7 Gewichts-% feindispergiertes synthetisches Wachs enthält.

Bevorzugt wird das Druckmedium, das 55 - 65 Gewichts-% Butylacetat, 25 - 30 Gewichts-% der Mischung aus Polyisobutylmethacrylat und Celluloseacetobutyrat und 4 - 6 Gewichts-% feindispergiertes synthetisches Wachs enthält.

Besonders bewährt hat sich das Druckmedium, wenn es zusätzlich 3 - 8 Gewichts-% Phthalsäureester als Weichmacher enthält. Beispiele für geeignete Phthalsäureester sind Dioctylphthalat und Butylbenzylphthalat; letzteres wird bevorzugt.

Ein weiterer Vorteil ergibt sich, wenn das Druckmedium zusätzlich 2 - 4 Gewichts-% Dimerfettsäuren in Form ihrer Alkylammoniumsalze enthält. Diese Alkylammoniumsalze haben eine stabilisierende Wirkung auf das in dem Druckmedium in feindispergierter Form vorliegende Wachs; außerdem fördern sie die Benetzung der in den keramischen Farbpräparaten enthaltenen Dekorfarben, Pigmente und Glasfritten und verbessern das Absetzverhalten.

Das Druckmedium wird durch Vermischen seiner Bestandteile bei Raumtemperatur unter intensivem Rühren hergestellt. Dabei wird das synthetische Wachs erst dann, wenn die übrigen Bestandteile eine klare Lösung gebildet haben, zugesetzt; im fertigen Druckmedium liegt es in feindispergierter Form vor. Als besonders günstig hat es sich erwiesen, wenn das synthetische Wachs aus der Gruppe der Polyethylenwachse ausgewählt wird. Bevorzugt wird ein Polyethylenwachs mit einem Tropfpunkt im Bereich von 119 -123° C.

Die Herstellung von für das Tiefdruckverfahren geeigneten keramischen Farbpräparaten aus dem erfindungsgemäßen Druckmedium, keramischen Farben und gegebenenfalls Glasfritten erfolgt durch Dispergieren und Homogenisieren, vorzugsweise über einem Dreiwalzenstuhl.

Zur näheren Erläuterung werden in den folgenden Beispielen ein Druckmedium gemäß der Erfindung (Beispiel 1), drei Vergleichsdruckmedien (Beispiele 2 bis 4), die Herstellung von keramischen Farbpräparaten unter Verwendung der angegebenen Druckmedien (Beispiel 5), die Herstellung von keramischen Abziehbildern und von eingebrannten Dekors aus den keramischen Farbpräparaten (Beispiel 6) und die Prüfung der wesentlichen Eigenschaften der keramischen Farbpräparate, Abziehbilder und Dekors (Beispiel 7) beschrieben.

### Beispiel 1 (Erfindung)

### Druckmedium

In der bereits beschriebenen Weise wird ein Druckmedium aus

| | |
|---|---|
| 60,6 Gewichts-% | Butylacetat |
| 16,1 Gewichts-% | Celluloseacetobutyrat |
| 12,5 Gewichts-% | Polyisobutylmethacrylat |
| 3,6 Gewichts-% | Butylbenzylphthalat |
| 4,5 Gewichts-% | feindispergiertes Polyethylenwachs, Tropfpunkt 121° C, und |
| 2,7 Gewichts-% | Alkylammoniumsalz von Dimerfettsäuren |

hergestellt.

### Beispiel 2 (Vergleich)

### Druckmedium

Es wird ein dem in Beispiel 1 beschriebenen ähnliches Druckmedium, jedoch mit außerhalb des erfindungsgemäßen Bereichs liegendem Gehalt an Polyisobutylmethacrylat und Butylbenzylphthalat und ohne feindispergiertes Wachs aus

| | |
|---|---|
| 64,3 Gewichts-% | Butylacetat |
| 22,6 Gewichts-% | Celluloseacetobutyrat |
| 7,5 Gewichts-% | Polyisobutylmethacrylat |
| 2,8 Gewichts-% | Butylbenzylphthalat und |
| 2,8 Gewichts-% | Alkylammoniumsalz von Dimerfettsäuren |

hergestellt.

### Beispiel 3 (Vergleich)

### Druckmedium

Es wird ein dem in Beispiel 1 beschriebenen ähnliches Druckmedium, jedoch mit außerhalb des erfindungsgemäßen Bereichs liegendem Gehalt an Polyisobutylmethacrylat und feindispergiertem Wachs aus

| | |
|---|---|
| 54,6 Gewichts-% | Butylacetat |
| 22,8 Gewichts-% | Celluloseacetobutyrat |
| 4,5 Gewichts-% | Polyisobutylmethacrylat |
| 3,6 Gewichts-% | Butylbenzylphthalat |
| 11,8 Gewichts-% | feindispergiertes Polyethylenwachs, Tropfpunkt 121° C, und |
| 2,7 Gewichts-% | Alkylammoniumsalz von Dimerfettsäuren |

hergestellt.

### Beispiel 4 (Vergleich)

### Druckmedium

Es wird ein dem in Beispiel 1 beschriebenen ähnliches Druckmedium, jedoch mit einem außerhalb des erfindungsgemäßen Bereichs liegenden Gehalt an feindispergiertem Wachs und ohne Polyisobutylmethacrylat aus

| | |
|---|---|
| 55,5 Gewichts-% | Butylacetat |
| 24,6 Gewichts-% | Celluloseacetobutyrat |
| 6,6 Gewichts-% | Butylbenzylphthalat |
| 10,7 Gewichts-% | feindispergiertes Polyethylenwachs, Tropfpunkt 121° C, und |
| 2,6 Gewichts-% | Alkylammoniumsalz von Dimerfettsäuren |

hergestellt.

### Beispiel 5

### Keramische Farbpräparate

In der bereits beschriebenen Weise werden vier keramische Farbpräparate aus jeweils 42 Gewichts-% der Druckmedien nach den Beispielen 1 bis 4, 42 Gewichts-% einer Blei-antimon-Dekorfarbe und 16 Gewichts-% eines Blei-antimon-Pigments hergestellt.

### Beispiel 6

### Keramische Abziehbilder und Dekors

Es werden keramische Abziehbilder mit aus den in Beispiel 5 beschriebenen Farbpräparaten im Tiefdruckverfahren erhaltenen Dekorschichten hergestellt. Die Abziehbilder werden auf weißes Porzellan übertragen und zur Erzeugung der Dekors bei 820° C eingebrannt.

### Beispiel 7

### Beurteilung der Druckmedien für das Tiefdruckverfahren

Zur Beurteilung der Druckmedien dienen Eigenschaften der sie enthaltenden keramischen Farbpräparate, der aus den Farbpräparaten durch Tiefdruck und anschließendes Trocknen erhaltenen Dekorschichten und der nach Übertragung der die Dekorschichten aufweisenden Abziehbilder auf Porzellan durch Einbrennen erzeugten Dekors.

Folgende Eigenschaften werden durch visuelle Prüfung bestimmt:
Verdünnbarkeit der keramischen Farbpräparate,
Absetzverhalten der anorganischen Bestandteile der keramischen Farbpräparate,
Konturenschärfe der gedruckten Rasterpunkte,
Trocknung,
Übertragbarkeit der Dekorschichten,
Ausbrand.

Die genannten Eigenschaften der keramischen Farbpräparate nach Beispiel 5 und der daraus hergestellten keramischen Abziehbilder und Dekors nach Beispiel 6 werden festgestellt und bewertet (siehe Tabelle). Die in der Tabelle benutzten Bewertungssymbole "-", "o", "+" und "++" bedeuten, daß die Kriterien der Eignung für das Tiefdruckverfahren nicht erfüllt ("-"), ansatzweise erfüllt ("o"), befriedigend erfüllt ("+") und sehr gut erfüllt ("++") sind. Wie die Tabelle zeigt, sind keramische Farbpräparate, die das erfindungsgemäße Druckmedium (Beispiel 1) enthalten, für das Tiefdruckverfahren sehr gut geeignet.

**Tabelle**

| Eigenschaften | Bewertung der Druckmedien nach | | | |
|---|---|---|---|---|
| | Beispiel 1 | Beispiel 2 | Beispiel 3 | Beispiel 4 |
| Verdünnbarkeit | ++ | + | o | + |
| Absetzverhalten | ++ | ++ | + | o |
| Konturenschärfe | ++ | ++ | ++ | - |
| Trocknung | ++ | ++ | ++ | ++ |
| Übertragbarkeit | ++ | ++ | o | o |
| Ausbrand | ++ | o | o | o |

## Patentansprüche

1. Druckmedium für keramische Farbpräparate zur Herstellung von keramischen Abziehbildern im Tiefdruck, dadurch gekennzeichnet, daß es 50 - 70 Gewichts-% Butylacetat, 25 - 30 Gewichts-% einer Mischung aus 40 - 65 Gewichts-% Polyisobutylmethacrylat und 35 - 60 Gewichts-% Celluloseacetobutyrat und 3 - 7 Gewichts-% feindispergiertes synthetisches Wachs enthält.

2. Druckmedium nach Anspruch 1, dadurch gekennzeichnet, daß es 55 - 65 Gewichts-% Butylacetat, 25 - 30 Gewichts-% der Mischung aus Polyisobutylmethacrylat und Celluloseacetobutyrat und 4 - 6 Gewichts-% feindispergiertes synthetisches Wachs enthält.

3. Druckmedium nach Anspruch 1 oder 2, dadurch gekennzeichnet, daß es zusätzlich 3 - 8 Gewichts-% Phthalsäureester enthält.

4. Druckmedium nach einem der Ansprüche 1 bis 3, dadurch gekennzeichnet, daß es zusätzlich 2 - 4 Gewichts-% Alkylammoniumsalz(e) von Dimerfettsäuren enthält.

5. Druckmedium nach einem der Ansprüche 1 bis 4, dadurch gekennzeichnet, daß es als Wachs Polyethylenwachs enthält.

6. Druckmedium nach einem der Ansprüche 3 bis 5, dadurch gekennzeichnet, daß es als Phthalsäureester Butylbenzylphthalat enthält.

## Claims

1. Printing medium for ceramic colouring preparations for the production of ceramic decals in intaglio printing, characterised in that it contains 50 to 70 wt.% butyl acetate, 25 to 30 wt.% of a mixture of 40 to 65 wt.% polyisobutyl methacrylate and 35 to 60 wt.% cellulose acetobutyrate and 3 to 7 wt.% of finely-dispersed synthetic wax.

2. Printing medium according to claim 1, characterised in that it contains 55 to 65 wt.% butyl acetate, 25 to 30 wt.% of the mixture of polyisobutyl methacrylate and cellulose acetobutyrate and 4 to 6 wt.% of finely-dispersed synthetic wax.

3. Printing medium according to claim 1 or 2,
characterised in that it contains in addition 3 to 8 wt.% phthalic ester.

4. Printing medium according to one of claims 1 to 3, characterised in that it contains in addition 2 to 4 wt.% of alkylammonium salt(s) of dimeric fatty acids.

5. Printing medium according to one of claims 1 to 4, characterised in that it contains polyethylene wax as the wax.

6. Printing medium according to one of claims 3 to 5, characterised in that it contains butylbenzyl phthalate as the phthalic ester.

## Revendications

1. Véhicule d'impression pour préparations de couleur pour céramique pour la fabrication d'images à décalquer céramiques en impression par héliogravure, caractérisé en ce qu'il contient 50-70% en poids d'acétate de butyle, 25-30% en poids d'un mélange de 40-65% en poids de poly(méthacrylate d'isobutyle) et de 35-60% en poids d'acétobutyrate de cellulose et 3-7% en poids d'une cire synthétique finement dispersée.

2. Véhicule d'impression selon la revendication 1, caractérisé en ce qu'il contient 55-65% en poids d'acétate de butyle, 25-30% en poids d'un mélange de poly(méthacrylate d'isobutyle) et d'acétobutyrate de cellulose et 4-6% en poids d'une cire synthétique finement dispersée.

3. Véhicule d'impression selon la revendication 1 ou 2, caractérisé en ce qu'il contient en outre 3-8% en poids d'un ester d'acide phtalique.

4. Véhicule d'impression selon l'une des revendications 1 à 3, caractérisé en ce qu'il contient en outre 2-4% en poids d'un ou de sel(s) d'alkylammonium d'acides gras dimères.

5. Véhicule d'impression selon l'une des revendications 1 à 4, caractérisé en ce qu'il contient comme cire une cire de polyéthylène.

6. Véhicule d'impression selon l'une des revendications 3 à 5, caractérisé en ce qu'il contient comme ester d'acide phtalique un phtalate de butylbenzyle.
